# EUROPÄISCHE PATENTSCHRIFT

(11) **EP 0 846 231 B1**
(45) Veröffentlichungstag und Bekanntmachung des Hinweises auf die Patenterteilung: **03.11.1999**
(21) Anmeldenummer: 96929218.4
(22) Anmeldetag: 07.08.1996
(51) Int. Cl.: F16B 13/06

(54) **METALLBLECHDÜBEL**
SHEET METAL DOWEL
CHEVILLE EN TOLE METALLIQUE

(30) Priorität: 22.08.1995 DE 19530782
(43) Veröffentlichungstag der Anmeldung: 10.06.1998
(73) Patentinhaber: A. Raymond & Cie, 38028 Grenoble (FR)
(72) Erfinder: MUTZ, Bernd, D-79650 Schopfheim (DE); DALER, Helmo, D-79539 Lörrach (DE)
(74) Vertreter: Kirchgaesser, Johannes, Dipl.-Ing.
(86) Internationale Anmeldenummer: EP9603490
(87) Internationale Veröffentlichungsnummer: WO9708466

(56) Entgegenhaltungen:
- DE-C- 736 625
- FR-A- 697 676
- FR-A- 917 460
- FR-A- 2 200 917
- FR-A- 2 704 608

## Beschreibung

Die Erfindung bezieht sich auf einen Metallblechdübel, welcher gemäß dem Oberbegriff des Anspruchs 1 folgende Teile umfaßt: eine Gewindehülse zum Eindrehen einer Schraube, zwei *durch axial wirkende Zugkräfte* nach außen aufspreizbare, halbzylinderförmig ausgebildete Schaftschalen, die diametral gegenüberliegend am Rand der Gewindehülse einstückig angeformt und an den freien Schaftenden zu einem Schafthals zusammengeführt sind, sowie von diesem Schafthals radial nach außen abgewinkelte Lappen zur Anlage des Dübels am Rand eines Dübelloches.

Ein derartiger Metallblechdübel ist beispielsweise bekannt durch **GB 21 91 838**. Bei diesem Dübel weisen die beiden Schaftschalen über ihre Länge mehrere Knickstellen auf, wobei je eine Knickstelle an der Gewindehülse und am Gewindehals und eine weitere etwa in der Mitte vorgesehen sind. Nach dem Einführen des Dübels in das Dübelloch der Trägerplatte und dem Eindrehen und Anziehen der Schraube knicken die Schafthälften am Schafthals und unterhalb der Gewindehülse nach außen weg, während die Schafthälften an der mittleren Knickstelle nach innen zusammenklappen. Dabei stützen sich die beiden unteren Schafthälften auf der Rückseite der Trägerplatte ab.

Bei diesem Dübel wird es als Nachteil empfunden, daß die Gewindehülse zwischen den gespreizten Schafthälften nur über die Knickstellen abgestützt ist und dadurch beim Anziehen der Schraube nachgeben kann. Außerdem ist dieser Dübel nur bei solchem Baumaterial verwendbar, wo die Schafthälften nach außen wegknicken können, nicht aber bei massivem Baumaterial oder in Hohlraumziegeln.

Aufgabe der Erfindung ist es daher, den vorgenannten Metallblechdübel so zu gestalten, daß der Schaft universell in jedem Baumaterial einsetzbar ist und dabei gleichzeitig eine stabile Abstützung der Gewindehülse auf dem gespreizten Schaft gewährleistet ist.

Diese Aufgabe wird erfindungsgemäß dadurch gelöst, daß aus den Schaftschalen eine Vielzahl von *schraubenförmig gewendelten* Stegen freigeschnitten *ist,* welche sich über die ganze Schalenbreite bis *zu* verbleibenden Randstreifen erstrecken und *beim Eindrehen der Schraube ebenfalls seitwärts aufspreizen.*

Aus **FR-A-697 767** ist zwar bereits ein Metallblechdübel bekannt, der bis auf die Gewindehülse und die axial wirkenden Zugkräfte alle Merkmale des Oberbegriffs erfüllt und bei dem aus den Schaftschalen eine Vielzahl von Stegen freigeschnitten ist, die sich nahezu über die ganze Schalenbreite erstrecken und ebenso schraubenförmig gewendelt sind. Dieser Dübel funktioniert jedoch nur in Verbindung mit einer zwischen den Schaftschalen eingebetteten Druckeinlage, welche beim Eindrehen einer Schraube die Schaftschalen durch radial wirkende Keilkräfte so weit nach außen preßt, daß diese in einem Bohrloch festen Halt finden. Zur Verankerung in Hohlsteinen oder Trägerplatten ist dieser Dübel sicher nicht geeignet, da die gewendelten Stege laut Figur 6 der Patentzeichnung von einer solchen Breite sind, daß die mit den leicht verformbaren Schaftstegen des Anmeldungsgegenstandes durch die axial wirkenden Zugkräfte erreichbaren Spreizung und Deformation nicht vorgesehen und auch nicht vorstellbar ist.

Durch die freigeschnittenen Stege und deren schraubenförmige Wendelung wird der Schaft auf seiner ganzen Länge für den Verankerungszweck nutzbar gemacht. Mit ihren gewendelten Spreizstegen bieten die Schaftschalen beim Anziehen der Schraube einen hervorragenden Halt im Dübelloch des Trägersteins, egal, ob es sich um einen massiven Stein oder einen Hohlstein handelt oder ob der Dübel im Loch einer Platte befestigt werden soll.

Weitere Merkmale der Erfindung sind in den Unteransprüchen enthalten und sollen nachfolgend anhand eines in der Zeichnung dargestellten Ausführungsbeispiels der Erfindung näher erläutert werden.
Es zeigt:
- Fig. 1: den Metalldübel in Seitenansicht mit Blick auf die gewendelten Stege,
- Fig. 2: den Metalldübel in einer um 90° gedrehten Seitenansicht,
- Fig. 3: den Metalldübel in einer Draufsicht mit Blick auf den Dübelhals,
- Fig. 4: die aus dem Blechstreifen ausgestanzten Schafthälften mit symmetrisch angeformter Gewindehülse und
- Fig. 5: ein Metalldübel im Einsatz mit angezogenem Schaft und aufgespreizten Stegen.

Der in den Figuren dargestellte Metallblechdübel umfaßt eine Gewindehülse **1** zum Eindrehen einer Metallschraube, einen zusammendrückbaren Schaft **2** mit auseinanderspreizbaren Stegen **3** sowie einen Schafthals **4** am entgegengesetzten Schaftende mit radial nach außen abgewinkelten Lappen **5** zur Anlage des Dübels am Rand eines Dübelloches.

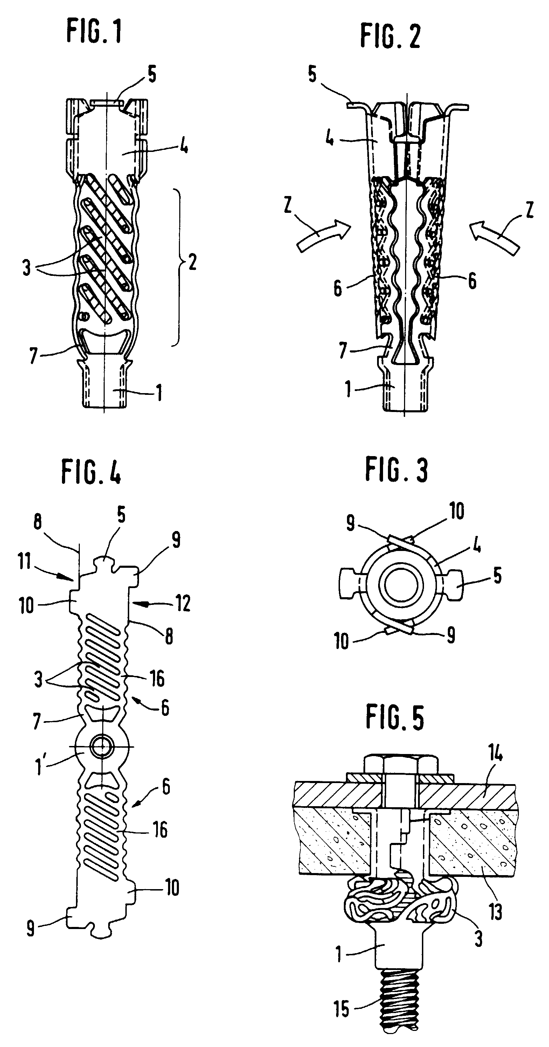

Der Schaft **2** selber besteht aus zwei halbzylinderförmig ausgebildeten Schaftschalen **6**, die diametral gegenüberliegend am Rand der Gewindehülse **1** angeformt sind, indem sie - wie aus Figur 4 ersichtlich -, beiderseits der zum Ausformen der Gewindehülse **1** vorgestanzten Rundplatte **1'** in einer Reihe aus einem Blechstreifen ausgeformt und dann an den freien Schaftenden - wie aus Figur 2 ersichtlich - in Richtung der Pfeile "**Z**" zusammengeführt sind. Die Stege **3** erstrecken sich hierbei über die ganze Breite der Schaftschalen **6** bis an die verbleibenden schmalen Randstreifen **16** und werden im besagten Blechstreifen vorzugsweise schräg zur Längsachse ausgestanzt, so daß diese bei den halbzylindrisch geformten, zusammengeführten Schaftschalen **6** schraubenförmig gewendelt sind.

Die Schaftschalen **6** sind in der vorgestanzten Lage gemäß Figur 4 vorzugsweise jeweils über zwei radial zur Hülsenplatte **1'** ausgerichtete Stege **7** mit dem Rand der Gewindehülse **1** verbunden.

An den einander gegenüberliegenden Kanten **8** der freien Schaftenden sind an dem Schafthals **4** tangential nach außen abstehende Lappen **9** und **10** angeformt, welchen entsprechend breite Aussparungen **11** und **12** auf den jeweils gegenüberliegenden Schalenkanten **8** zugeordnet sind. Diese Lappen **9** und **10** greifen beim Zusammenführen der Schalenhälften **6** in die entsprechenden Aussparungen **11** und **12** ein und stehen über dem Schafthals **4** etwas vor. Dadurch werden nicht nur die Schaftschalen **6** am Hals **4** zueinander fixiert, sondern es wird noch sichergestellt, daß der Hals **4** im Dübelloch gegen Verdrehung gesichert ist.

Fig. 5 zeigt den erfindungsgemäßen Metallblechdübel im Einsatz. Der Dübel sitzt hierbei mit seinem Schafthals **4** im Loch einer Trägerplatte **13**, auf welcher eine andere Platte **14** mittels einer Schraube **15** befestigt ist.

Die Gewindehülse **1** ist durch die Schraube **15** an die Platte **13** herangezogen und hat dabei die Schaftschalen **6** seitwärts gespreizt, wobei durch die sich leicht verformbaren gewendelten Stege **3** eine feste rückseitige Anlage erreicht wird. Es versteht sich, daß die Schaftschalen **6** auch bei querliegenden oder gitterartig aufgebauten Schaftstegen **3** gut in der Lage sind, sich beim Zusammenziehen auf der Rückseite der Trägerplatte **13** breitflächig anzulegen.

## Patentansprüche

1. Metallblechdübel umfassend eine Gewindehülse zum Eindrehen einer Schraube, zwei *durch axial wirkende Zugkräfte* nach außen aufspreizbare, halbzylinderförmig ausgebildete Schaftschalen ( 6 ), die diametral gegenüberliegend am Rand der Gewindehülse ( 1 ) einstückig angeformt und an den freien Schaftenden zu einem Schafthals ( 4 ) zusammengeführt sind, sowie von diesem Schafthals ( 4 ) radial nach außen abgewinkelte Lappen ( 5 ) zur Anlage des Dübels am Rand eines Dübelloches, dadurch gekennzeichnet, daß aus den Schaftschalen ( 6) eine Vielzahl von *schraubenförmig gewendelten* Stegen ( 3 ) freigeschnitten *ist,* welche sich über die ganze Schalenbreite bis *zu* verbleibenden Randstreifen ( 16) erstrecken und *beim Eindrehen der Schraube ebenfalls seitwärts aufspreizen.*

2. Metallblechdübel nach Anspruch 1 , dadurch gekennzeichnet, daß an den einander gegenüberliegenden Kanten ( 8 ) der freien Schaftenden tangential nach außen abstehende Lappen ( 8 und 9 ) angeformt sind, welche in entsprechend breite Aussparungen ( 10 und 11 ) der jeweils gegenüberliegenden Schalenkanten ( 8) derart eingreifen, daß nach dem Zusammenführen der Schaftschalen ( 6 ) die Schalenkanten ( 8 ) der Schaftenden zueinander fixiert sind und die Lappen ( 8 und 9 ) über den Schafthals ( 4 ) vorstehen.

3. Metallblechdübel nach Anspruch 1 oder 2, dadurch gekennzeichnet, daß die Schaftschalen ( 6 ) jeweils über zwei Stege ( 7 ) mit dem Rand der Gewindehülse ( 1 ) verbunden sind, welche in der vorgestanzten Lage des noch nicht verformten Blechstreifens radial zu der zum Tiefziehen der Gewindehülse ( 1) vorgesehenen Rundplatte (1') ausgerichtet sind.

## Claims

1. A sheet metal dowel including a screwthreaded sleeve for screwing in a screw. two shank shell portions (6) which are of a semicylindrical configuration and which can be spread outwardly by axially acting tensile forces and which are integrally formed in diametrally mutually opposite relationship at the edge of the screwthreaded sleeve (1) and which are brought together at the free shank ends to form a shank neck (4), and lugs (5) angled radially outwardly from said shank neck (4) for the dowel to bear against the edge of a dowel hole, characterised in that a plurality of helically turned bar portions (3) are cut free from the shank shell portions (6) and extend over the entire shell portion width as far as remaining edge strip portions (16) and also spread out sideways when the screw is screwed in.

2. A sheet metal dowel according to claim 1 characterised in that tangentially outwardly projecting lugs (9 and 10) are formed at the mutually oppositely disposed edges (8) of the free shank ends and engage into openings (11 and 12) of suitable width at the respective oppositely disposed shell portion edges (8) in such a way that after the shank shell portions (6) are brought together the shell portion edges (8) of the shank ends are fixed relative to each other and the lugs (9 and 10) project beyond the shank neck (4).

3. A sheet metal dowel according to claim 1 or claim 2 characterised in that the shank shell portions (6) are each connected to the edge of the screwthreaded sleeve (1) by way of two bar portions (7) which in the pre-stamped position of the sheet metal strip which has not yet been shaped are oriented radially with respect to the round plate portion (1') provided for deep drawing of the screwthreaded sleeve (1).

## Revendications

1. Cheville en tôle métallique comprenant une douille filetée pour le vissage d'une vis, deux coquilles de forme semi-cylindique formant corps (6), susceptibles des s'écarter vers l'extérieur *sous l'action de deux sollicitations à la traction s'exerçant dans le plan axial,* qui sont réalisées, diamétralement opposées, solidaires par formage, selon une configuration monobloc, du bord de la douille filetée (1) et qui sont rapprochées, au niveau de leurs extrémités libres, pour former une tête de corps (4), ainsi que des languettes (5) qui, partant de cette tête de corps (4), sont repliées de manière angulaire vers l'extérieur dans le plan radial pour faire fonction de portée d'appui de la cheville sur le bord d'un trou de passage de la cheville, caractérisée en ce qu'une pluralité de nervures (3) *réalisées selon une disposition hélicoïdale* sont formées par découpage dans les coquilles formant corps (6), qui s'étendent sur toute la largeur des coquilles jusqu'à des portions de bord (16) restant à l'état initial et qui *s'écartent également dans le plan latéral lors du vissage de la vis.*

2. Cheville en tôle métallique selon la revendication 1, caractérisée en ce qu'au niveau des bords (8) se faisant respectivement face des extrémités libres du corps, se trouvent, réalisées solidaires de ceux-ci par formage, des languettes (8) et (9) faisant saillie de manière tangentielle vers l'extérieur qui viennent s'encastrer dans des évidements (10 et 11), de largeur correspondante, ménagés dans les bords des coquilles respectivement diamétralement oppcsés, dans des conditions telles qu'une fois les coquilles formant corps (6) rapprochées l'une de l'autre, les bords (8) des coquilles sont immobilisés l'un par rapport à l'autre et les languettes (8 et 9) font saillie au-dessus de la tête (4) du corps.

3. Cheville en tôle métallique selon la revendication 1 ou 2, caractérisée en ce que les coquilles formant corps (6) sont respectivement raccordées au bord de la douille filetée (1) par l'intermédiaire de deux barrettes entretoises (7) qui, dans la position avant découpage à la presse du flan en tôle non encore formé, sont orientées de manière radiale par rapport à la plaque de forme circulaire (1') prévue pour la réalisation par emboutissage profond de la douille filetée (1).
